(19) Europäisches Patentamt / European Patent Office / Office européen des brevets

(11) **EP 2 997 257 B1**

(12) **FASCICULE DE BREVET EUROPEEN**

(45) Date de publication et mention de la délivrance du brevet:
**12.12.2018 Bulletin 2018/50**

(21) Numéro de dépôt: **14719046.6**

(22) Date de dépôt: **26.03.2014**

(51) Int Cl.:
**F03D 13/20** *(2016.01)*

(86) Numéro de dépôt international:
**PCT/FR2014/050712**

(87) Numéro de publication internationale:
**WO 2014/184454 (20.11.2014 Gazette 2014/47)**

(54) **ÉOLIENNE OFFSHORE SUR SUPPORT FLOTTANT COMPORTANT UNE COMBINAISON DE MOYENS D'AMORTISSEMENT**

OFFSHORE-WINDTURBINE AUF EINER SCHWIMMENDEN HALTERUNG MIT EINER KOMBINATION AUS STOSSDÄMPFUNGSMITTELN

OFFSHORE WIND TURBINE ON A FLOATING MOUNT COMPRISING A COMBINATION OF SHOCK-ABSORBING MEANS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.05.2013 FR 1354474**

(43) Date de publication de la demande:
**23.03.2016 Bulletin 2016/12**

(73) Titulaire: **IFP Energies nouvelles**
**92500 Rueil-Malmaison (FR)**

(72) Inventeurs:
• **GILLOTEAUX, Jean-Christophe**
**92500 Rueil Malmaison (FR)**
• **POIRETTE, Yann**
**38121 Reventin-Vaugris (FR)**
• **POURTIER, Alice**
**78440 Fontenay St Pere (FR)**
• **BOZONNET, Pauline**
**75001 Paris (FR)**
• **FERRER, Gilles**
**92500 Rueil-Malmaison (FR)**
• **PAPON, Gérard**
**78690 Les Essarts Le Roi (FR)**
• **PERDRIZET, Timothée**
**69007 Lyon (FR)**
• **SAEEDI, Navid**
**94140 Alfortville (FR)**

(74) Mandataire: **IFP Energies nouvelles**
**Rond-point de l'échangeur de Solaize**
**BP3**
**69230 Solaize (FR)**

(56) Documents cités:
**WO-A1-03/004869       WO-A1-2012/169914**

**Description**

La présente invention concerne le domaine des éoliennes en mer (offshore), en particulier les éoliennes montées sur un support flottant amarré au fond de la mer. Un des problèmes que se propose de résoudre l'invention est la stabilité de l'éolienne afin que le plan des pales reste dans une position optimale pour la fourniture de la puissance, et ceci dans les meilleures conditions.

Divers supports flottants dédiés à l'installation d'éoliennes de plusieurs mégawatt au large des côtes sont en cours de développement dans de nombreux pays. Selon la profondeur du site considéré, plusieurs options de conception sont envisageables. Malgré leur grande diversité, trois grandes familles de support flottant se dégagent selon la nature du couple de redressement hydrostatique employé. On peut citer :

- les flotteurs de type SPAR caractérisés par une forme géométrique élancée et comportant un ballast important afin d'abaisser au maximum le centre de gravité de l'ensemble de la structure dans le but d'assurer la stabilité,

- les supports de type TLP (Tension Leg Platform) qui ont la particularité d'être amarrés au fond de la mer par des câbles tendus garantissant la stabilité de la structure,

- les flotteurs de type semi-submersible qui présentent un moment d'inertie à la surface de flottaison important leur procurant ainsi un couple de redressement suffisant à leur stabilité.

En terme de redressement hydrostatique, les flotteurs de type barge sont à ranger dans la catégorie des plateformes semi-submersibles de part leur surface à la flottaison importante, mais diffèrent cependant de ces dernières de part leur aspect beaucoup plus compact.

Cependant, dans le domaine des éoliennes offshore, qui présentent en particulier des élancements aériens très important, les supports flottant classiques ne sont pas toujours adaptés aux contraintes de fonctionnement du rotor. Les éoliennes offshore étant, d'une part sensibles à l'inclinaison de leur axe de rotation et d'autre part, aux accélérations importantes au niveau de la nacelle, tout le travail de conception des supports flottant réside donc à satisfaire au moins ces deux contraintes tout en évitant d'avoir un coût prohibitif. Quelques exemples d'éoliennes offshore flottantes sont connus par exemple de WO 2012/169914 et WO 03/004869.

La présente invention concerne une éolienne offshore sur un support flottant comportant en combinaison:

- un flotteur principal comportant une partie de forme sensiblement cylindrique,
- un élément circulaire en béton de diamètre Dd supérieur au diamètre Dc du flotteur principal constituant à la fois une masse fixe à la base du flotteur et des moyens d'amortissement,
- des moyens complémentaires de ballastage permanent (4) situés à la base du flotteur principal,
- des caissons de ballastage dynamique inclus dans le flotteur principal, et répartis en couronne à la périphérie dudit flotteur.

Selon l'invention, le ratio diamètre Dc/tirant d'eau peut être compris entre 1,3 et 1.

Le diamètre extérieur Dd de la jupe peut être compris entre 1,5 et 2 fois le diamètre du flotteur Dc, et de préférence proche de 1,75.

La jupe peut avoir une épaisseur décroissante en direction de son diamètre extérieur.

Le ballast permanent à la base du flotteur principal peut être constitué par du béton, ou de l'eau , ou une combinaison des deux.

Un système d'ancrage funiculaire peut maintenir l'éolienne en place.

L'éolienne offshore sur support flottant peut avoir l'axe des pales horizontal.

L'éolienne offshore sur support flottant peut avoir l'axe des pales vertical.

La présente invention sera mieux comprise et ses avantages apparaitront plus clairement à la lecture de la description qui suit d'un mode de réalisation préféré, nullement limitatif et illustré par les figures ci-après annexées, parmi lesquelles:

- la figure 1 montre schématiquement l'ensemble éolienne sur son support flottant,
- la figure 2 donne l'évolution de l'assiette d'un support flottant de forme cylindrique en fonction de son rayon et du tirant d'eau,
- la figure 3 montre l'influence du diamètre Dd sur la fréquence de résonance en pilonnement,
- la figure 4 montre schématiquement en coupe une géométrie de la "jupe",
- les figures 5a, 5b et 5c représentent trois exemples de constitution du ballast permanent et des caissons de ballastage dynamique,

- les figures 6a et 6b illustrent les caissons de ballastage,
- la figure 7 illustre la géométrie des caissons de ballastage pour un angle d'assiette cible de 5°.

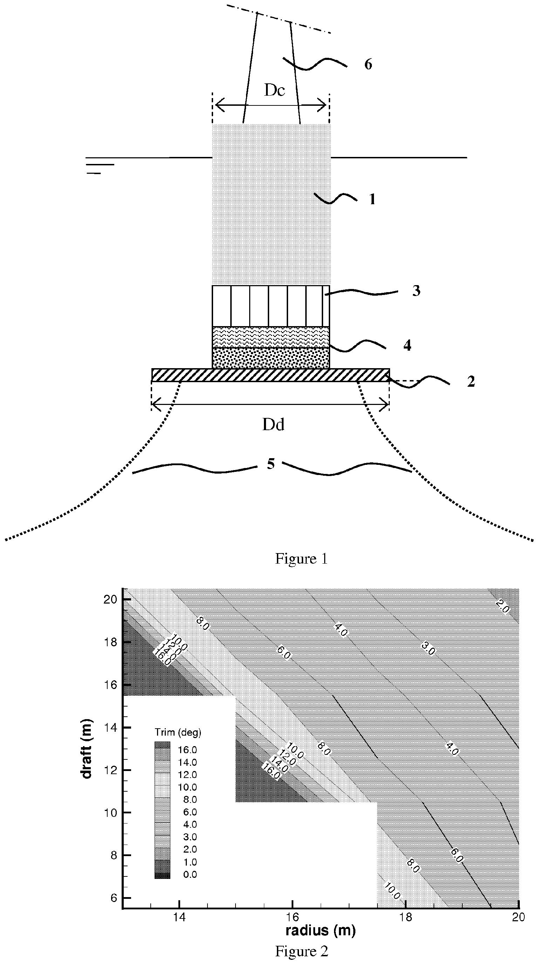

Sur la figure 1, le support flottant est composé d'un flotteur principal 1 comportant au moins une partie de géométrie cylindrique (circulaire) auquel est ajouté en partie inférieure une plaque amortisseur 2, aussi dénommée "jupe". C'est dans cette partie cylindrique que s'inscrit la combinaison des différents moyens de ballastage: permanent et dynamique. La partie supérieure du flotteur principal peut avoir d'autres formes extérieures, telle conique, cylindrique de diamètre différent, adaptées aux écoulements hydrodynamiques. Un ballast permanent 4, nécessaire au contrôle de l'équilibre hydrostatique, est placé en fond de flotteur pouvant être constitué de béton, d'eau de mer, ou toute matière solide ou liquide pesante. Les masses de ces différentes matières sont réparties pour satisfaire à la fois les critères de stabilité statique et dynamique mais aussi pour minimiser le cout de fabrication.. Au dessus du ballast permanent 4, et en périphérie du flotteur principal 1 à l'intérieur du cylindre, sont disposés plusieurs compartiments 3 dont les volumes peuvent être ballastés ou dé-ballastés selon les conditions de fonctionnement de l'éolienne 6. La poussée aérodynamique associée au fonctionnement de l'éolienne modifie l'angle d'assiette de la plateforme. Les ballasts 3 permettent de corriger et de régler cet angle d'assiette et donc de l'axe de l'éolienne. La plateforme est équipée de conduites et de pompes permettant de transférer une quantité de liquide dans les différents volumes, le volume total de liquide étant généralement maintenu constant.

Les dimensions du flotteur principal sont telles que le ratio diamètre Dc/tirant reste compris entre 1,3 et 1, c'est-à-dire éloignée de la forme élancée des bouées SPAR.

L'éolienne, qu'elle soit à axe horizontal (HAWT "Horizontal Axis Wind Turbine") ou à axe vertical (VAWT "Vertical Axis Wind Turbine"), génère une poussée horizontale induite par le vent à laquelle s'ajoute les forces de trainées sur la nacelle et le mât de l'éolienne. Ces forces ont tendance à faire pencher la structure flottante: on parle alors de changement d'angle d'assiette. En modifiant la répartition de liquide dans les ballasts, on peut ainsi faire en sorte de réduire les variations de l'angle d'assiette du support. Ainsi, l'éolienne fonctionne de manière optimale et on prévient tout risque de fatigue des différents composants mécaniques.

En première approximation, le dimensionnement d'une plateforme supportant une éolienne doit satisfaire deux contraintes principales à savoir :

- avoir un volume immergé suffisant pour supporter le poids de l'éolienne, de son système d'amarrage, ainsi que son propre poids,
- présenter un couple de redressement suffisant pour pouvoir contenir l'effort maximum de poussée aérodynamique de l'éolienne considéré.

En considérant des déplacements de faible rotation, ces deux contraintes peuvent se traduire mathématiquement par les relations suivantes :

$$\begin{cases} \rho\forall = M_{tot} \\ F_T \cdot (H_{hub} + Z_{CG}) = \left( \rho\forall g Z_{CB} - M_{tot} g Z_{CG} + \rho g \pi \dfrac{D_c^{\,4}}{8} + C_{55,lignes} \right) \cdot \theta \end{cases}$$

avec

$\rho$ : masse volumique de l'eau (Kg/m$^3$),
g : la gravité (m/s$^2$),
$M_{tot}$ : masse totale de la structure (Kg),
$\forall$ : volume immergé (m$^3$),
$F_T$ : force de poussée aérodynamique au niveau du hub (N),
$H_{hub}$ : altitude du hub (m),
$Z_{CG}$ : position verticale du centre de gravité de l'ensemble de la structure (m),
$Z_B$ : centre de flottaison (m),
$D_c$ : diamètre du flotteur (m),
$D_d$ : diamètre des jupes (m),
$C_{55,\,lignes}$ : raideur en tangage associée à l'amarrage (N.m/rad),
$\theta$ : angle d'assiette (rad).

La figure 2 montre l'évolution de l'angle d'assiette (Trim) d'un support flottant de forme cylindrique en fonction de son rayon (radius) et de son tirant d'eau (Draft) lorsque celui-ci est soumis au moment associé à la poussée maximale d'une éolienne à axe horizontal de 5 MW. Les zones blanches correspondent aux configurations où le support flottant n'est pas stable. Ce genre de résultat permet donc de rendre compte des différentes configurations possibles selon l'angle d'assiette désirée.

L'ajout de jupes a pour but de décaler la période de résonance en pilonnement, ou mouvement d'oscillation verticale, du support flottant en dehors des périodes prédominantes de houle (de manière générale ces périodes de houle sont contenues dans un spectre s'étalant de 3 s à 20 s) où l'énergie des vagues est principalement concentrée, de sorte à réduire les amplitudes des déplacements verticaux de la structure et ainsi assurer des conditions optimales de fonctionnement du rotor de l'éolienne. Dans le cas d'un flotteur cylindrique et de deux jupes circulaires, cette période de résonance en pilonnement peut être calculée au travers de la relation suivante :

$$T_Z = 2\pi \sqrt{\frac{M_{tot} + m_{add}(\infty)}{K_{HZ}}}$$

qui relie la période de résonance en pilonnement $T_Z$ à la masse totale $M_{tot}$ de la structure (amarrage, éolienne, flotteur), à la masse d'eau ajoutée pour une fréquence infinie $m_{add}(\infty)$ associée ainsi qu'au terme de raideur hydrostatique en pilonnement $K_{H7}$, avec[i]

$$\begin{cases} K_{HZ} = \rho\pi \dfrac{D_c^2}{4} \\ m_{add}(\infty) = \dfrac{1}{3}\rho D_d^{\,3} \end{cases}$$

avec $D_d$ diamètre de la "jupe".

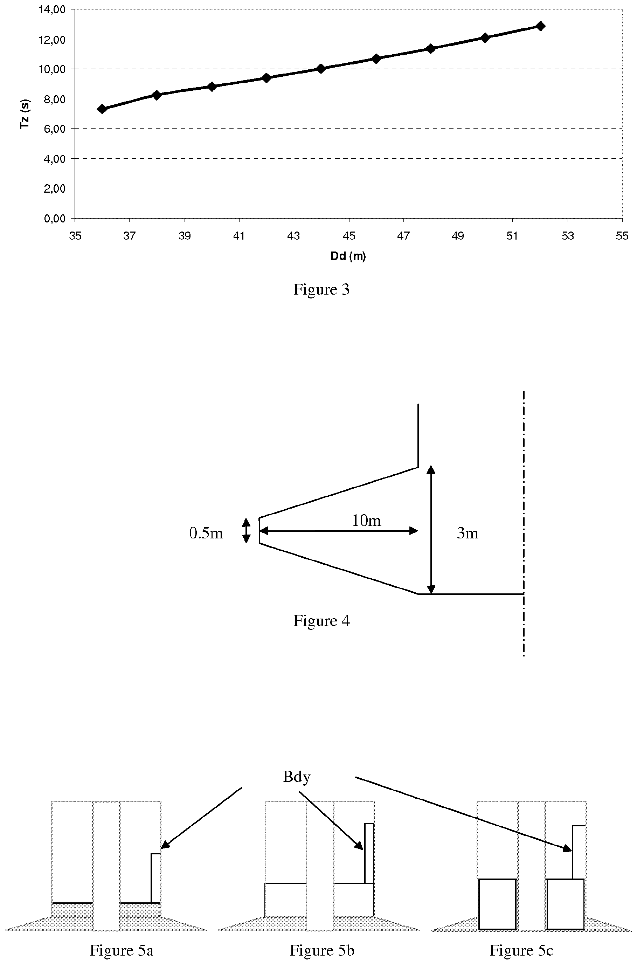

Une étude paramétrique a ainsi consisté à estimer l'influence du diamètre de la plaque amortisseur ("jupe") sur la période de résonance en pilonnement (Figure 3).

Ces résultats montrent tout d'abord que l'ajout d'une plaque amortisseur améliore nettement les performances d'une plateforme du type barge. On note donc qu'un choix opportun des principaux paramètres de dimensionnement du flotteur et des jupes permet de décaler efficacement la période de résonance en pilonnement en dehors des périodes prédominantes de houle.

Le rôle premier de la jupe est de décaler les fréquences propres en pilonnement, comme expliqué précédemment. De plus, de manière à améliorer la stabilité du flotteur, l'utilisation de la jupe comme un volume de ballast permanent s'avère une construction très intéressante. En effet, la jupe est située à l'extrémité inférieure du flotteur et son volume peut potentiellement être important, notamment compte tenu de son diamètre extérieur élevé. La présente invention rajoute une fonction de ballast permanent à l'élément "jupe". Sa forme est de préférence conique. L'épaisseur sur le diamètre extérieur est diminuée pour ne pas avoir d'effet hydrodynamique négatif, notamment pour le décalage des fréquences propres. Sur le diamètre intérieur, l'épaisseur est considérablement augmentée pour permettre une masse de ballast la plus élevée possible. Les études hydrodynamiques ont montré qu'il était préféré d'avoir une épaisseur maximale sur le diamètre extérieur d'environ 0,5 m et qu'un angle de cône de l'ordre de 7.5° restait acceptable. En tenant compte de ces contraintes, la géométrie de la jupe préférée est par exemple celle représentée sur la figure 4.

La tenue de la jupe en béton a été vérifiée en pression, représentative de la pression hydrodynamique exercée lors des mouvements de pilonnement du flotteur en présence d'une houle quinquennale d'Atlantique nord avec une période de pic de houle proche de la période de résonance en pilonnement. La jupe pourra être réalisée avec d'autres matériaux si besoin, ou remplie partiellement de béton et d'un autre matériau, solide ou liquide. Des études ont permis d'estimer les efforts hydrodynamiques sur la jupe. A partir de cette donnée d'entrée, un calcul éléments finis a été réalisé sur Abaqus pour vérifier la tenue mécanique de cette structure en béton. Les résultats en contrainte dans la structure en béton, supposée sans renfort en acier (les armatures éventuelles auront tendance à réduire les contraintes dans le béton), montrent que la contrainte maximale de Von Mises est très nettement inférieure à 5 MPa, la contrainte en traction S11 est au maximum de 2,4 MPa. Ces valeurs montrent que le béton reste dans le domaine élastique, aussi bien en traction qu'en compression. Sa tenue mécanique est donc assurée sous les efforts de pression hydrodynamiques évalués.

Le ballast complémentaire permanent peut être constitué de béton, d'eau, de tout autre matériaux solide ou liquide, ou d'une combinaison de ces matériaux. Le ballast permanent doit être de densité moyenne suffisante pour assurer la stabilité hydrostatique du support flottant compte tenu du volume utile de la plateforme (volume du flotteur principal + volume de la jupe - volume du ballast dynamique).

L'utilisation d'une combinaison de matériaux, béton + eau par exemple, permet de bénéficier de la densité du béton en réduisant les couts. La répartition des deux matériaux aura un impact sur la quantité de ballast dynamique nécessaire et sur la période en tangage du support. En effet toute modification de la distribution béton/eau va modifier le centre de gravité du support d'une part, et son inertie d'autre part.

Dans l'exemple suivant (figures 5a, 5b, 5c), on a considéré les cas où le ballast complémentaire permanent est constitué de béton uniquement (cas 1), et deux combinaisons de béton et d'eau (cas 2 et cas 3). Dans tous les cas, la jupe est en béton.

Dans le cas 5a, le ballast est entièrement constitué d'une matière solide comme le béton. Dans le cas 5b, une partie du béton a été substitué par un ballast permanent fait d'un liquide comme de l'eau de mer. Enfin dans le cas 5c on a cherché à minimiser la masse de béton tout en sauvegardant son intégrité structurelle. Sur ces figures, les caissons de ballastage sont situés au dessus du ballast permanent mais on peut imaginer des configurations visant à positionner ces caissons de ballastage plus bas

Le Tableau ci dessous montre l'influence de la distribution du ballast permanent sur le ballast dynamique et la période propre en tangage.

|  | Cas 5a | Cas 5b | Cas 5c |
|---|---|---|---|
| Masse d'eau dans les caissons de ballastage | 375 t | 460 t | 605 t |
| Période propre en tangage | 28 s | 32 s | 40 s |

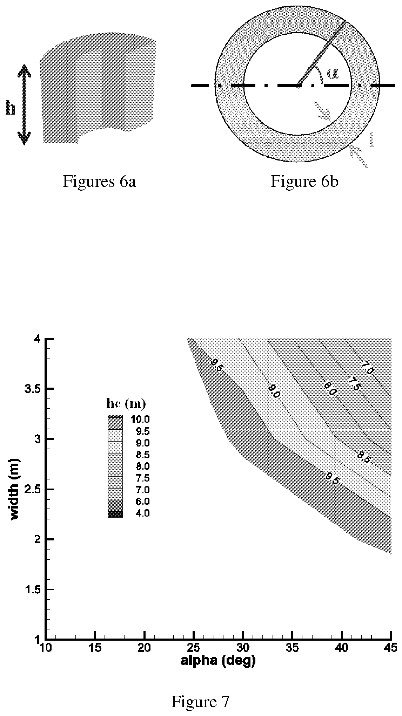

Le ballast dynamique envisagé consiste à remplir les réservoirs 3 placés en périphérie du support flottant avec un liquide. Les paramètres de dimensionnement sont : un angle $\alpha$ définissant la répartition angulaire des compartiments du ballast de part et d'autre de l'axe de poussée, une largeur de réservoir notée $l$, ainsi qu'une hauteur h de remplissage (figures 6a et 6b)

A géométrie de flotteur principal et de jupes fixée (rayon 13 m, tirant d'eau 20,5 m), une étude paramétrique a été menée afin de savoir quelle hauteur d'eau était nécessaire pour atteindre un angle d'assiette cible suivant la répartition angulaire $\alpha$ et la largeur $l$ de réservoir. La Figure 7 montre ainsi la hauteur d'eau $he$ nécessaire pour obtenir un angle d'assiette de 5° en présence d'une force de poussée aérodynamique de 80 tonnes au centre du rotor situé à 90 m de hauteur pour des largeurs de réservoir $l$ compris entre 1 et 4 m, un angle a compris entre 10 et 45°. La meilleure configuration peut ainsi être choisie suivant les critères retenus (volume de liquide, hauteur métacentrique,...).

Ces résultats montrent qu'une éolienne HAWT ou VAWT montée sur un support flottant tel que celui de la présente invention peut être maintenue suffisamment stable à condition d'un choix spécifique des principaux paramètres de dimensionnement. D'autre part, le ballastage dynamique disposé en combinaison dans la flotteur principal peut avec une assiette correcte pour la récupération d'énergie optimale.

La combinaison d'une jupe de dimension optimisée et fabriquée en matériau pesant tel le béton ou équivalent, d'un ballast permanent permettant de régler la masse totale pesante à la base du flotteur en fonction de l'éolienne et des conditions environnementales, de ballast dynamique pour contrôler l'angle d'assiette de l'éolienne, se révèle présenter beaucoup d'avantages tant techniques qu'économiques, et parfaitement adaptée à un support flottant portant une éolienne de forte puissance.

L'amarrage de ce support flottant peut être constitué de 3 lignes 5 d'ancrage caténaire réparties à 120°. Chacune des lignes est constituée d'une chaine attaché à deux point d'attache des lignes d'ancre ("fairleads") sur le support flottant à l'aide d'une connexion en Y (ou "crowfoot") . Ce type de connexion permet d'apporter de la raideur en lacet intrinsèquement faible sur ce type de support.

Par ailleurs, les points d'attache des lignes d'ancre sont situés au niveau du franc bord du support et non, comme c'est souvent le cas, au niveau du tirant d'eau. Cela permet d'apporter de la raideur en tangage et de réduire l'assiette du support flottant sous l'effet de la poussée sur la turbine. En contre partie; le tangage peut sous certaines conditions environnementales être accentué. Il faut alors trouver un compromis entre le gain sur l'assiette, et le tangage maximum que l'on peut s'autoriser en fonction des conditions opérationnelles.

Chaque ligne peut être également équipée d'une masse ponctuelle additionnelle qui a deux intérêts principaux : le premier d'éviter les efforts de compression sur toute la longueur de la chaine et le second d'apporter de la raideur supplémentaire en lacet et de diminuer le couplage lacet/roulis que l'on observe parfois sur les supports cylindriques.

**Revendications**

1. Éolienne offshore (6) sur un support flottant comportant en combinaison:

   - un flotteur principal (1) comportant une partie de forme sensiblement cylindrique,
   - un élément circulaire (2) en béton de diamètre Dd supérieur au diamètre Dc du flotteur principal (1) constituant à la fois une masse fixe à la base du flotteur et des moyens d'amortissement,
   - des moyens complémentaires de ballastage permanent (4) situés à la base du flotteur principal,
   - des caissons de ballastage dynamique (3) inclus dans le flotteur principal, et répartis en couronne à la périphérie dudit flotteur.

2. Éolienne offshore sur support flottant selon la revendication 1, dans laquelle le ratio diamètre Dc/tirant d'eau est compris entre 1,3 et 1.

3. Éolienne offshore sur support flottant selon l'une des revendications précédentes, dans laquelle le diamètre extérieur Dd dudit élément circulaire est compris entre 1,5 et 2 fois le diamètre du flotteur Dc, et de préférence proche de 1,75.

4. Éolienne offshore sur support flottant selon l'une des revendications précédentes, dans laquelle ledit élément circulaire a une épaisseur décroissante en direction de son diamètre extérieur.

5. Éolienne offshore sur support flottant selon l'une des revendications précédentes, dans laquelle le ballast permanent 4 à la base du flotteur principal est constitué par du béton, ou de l'eau , ou une combinaison des deux.

6. Éolienne offshore sur support flottant selon l'une des revendications précédentes, dans laquelle un système d'ancrage funiculaire (5) la maintient en place.

7. Éolienne offshore sur support flottant selon l'une des revendications précédentes, dans laquelle l'axe des pales est horizontal.

8. Éolienne offshore sur support flottant selon l'une des revendications 1 à 6, dans laquelle l'axe des pales est vertical.


**Patentansprüche**

1. Offshore-Windenergieanlage (6) auf einem schwimmenden Träger, umfassend in Kombination:

   - einen Hauptschwimmkörper (1), umfassend einen Teil mit einer im Wesentlichen zylindrischen Form,
   - ein kreisförmiges Element (2) aus Beton mit einem Durchmesser Dd, der größer ist als der Durchmesser Dc des Hauptschwimmkörpers (1), das gleichzeitig eine feste Masse auf der Basis des Schwimmkörpers und Dämpfungsmittel darstellt,
   - komplementäre permanente Ballastmittel (4), die auf der Basis des Hauptschwimmkörpers angeordnet sind,
   - dynamische Ballastbehälter (3), die in dem Hauptschwimmkörper enthalten sind, und kronenförmig am Umfang des Schwimmkörpers verteilt sind.

2. Offshore-Windenergieanlage auf einem schwimmenden Träger nach Anspruch 1, wobei das Verhältnis von Durchmesser Dc/Tiefgang zwischen 1,3 und 1 beträgt.

3. Offshore-Windenergieanlage auf einem schwimmenden Träger nach einem der vorhergehenden Ansprüche, wobei der Außendurchmesser Dd des kreisförmigen Elements zwischen dem 1,5- und 2-fachen des Durchmessers Dc des Schwimmkörpers beträgt, und vorzugsweise ungefähr 1,75.

4. Offshore-Windenergieanlage auf einem schwimmenden Träger nach einem der vorhergehenden Ansprüche, wobei das kreisförmige Element eine abnehmende Dicke in der Richtung seines Außendurchmessers aufweist.

5. Offshore-Windenergieanlage auf einem schwimmenden Träger nach einem der vorhergehenden Ansprüche, wobei der permanente Ballast (4) auf der Basis des Hauptschwimmkörpers aus Beton oder aus Wasser oder einer Kombination von beidem besteht.

6. Offshore-Windenergieanlage auf einem schwimmenden Träger nach einem der vorhergehenden Ansprüche, wobei ein Drahtseilverankerungssystem (5) diese festhält.

7. Offshore-Windenergieanlage auf einem schwimmenden Träger nach einem der vorhergehenden Ansprüche, wobei die Achse der Rotorblätter horizontal ist.

8. Offshore-Windenergieanlage auf einem schwimmenden Träger nach einem der Ansprüche 1 bis 6, wobei die Achse der Rotorblätter vertikal ist.

**Claims**

1. An offshore wind turbine (6) on $\alpha$ floating support structure comprising in combination:

   - a main floater (1) comprising a part of substantially cylindrical shape,
   - a concrete circular element (2) of diameter Dd greater than diameter Dc of main floater (1), making up both a stationary mass at the base of the floater and damping means,
   - supplementary permanent ballast means (4) arranged at the base of the main floater,

     - dynamic ballast boxes (3) included in the main floater and ringwise distributed on the periphery of said floater.

2. A floating offshore wind turbine as claimed in claim 1, wherein the diameter Dc/draft ratio ranges between 1.3 and 1.

3. A floating offshore wind turbine as claimed in any one of the previous claims, wherein the outside diameter Dd of said circular element ranges between 1.5 and 2 times diameter Dc of the floater, and it is preferably close to 1.75.

4. A floating offshore wind turbine as claimed in any one of the previous claims, wherein said circular element has a decreasing thickness in the direction of the outside diameter thereof.

5. A floating offshore wind turbine as claimed in any one of the previous claims, wherein permanent ballast (4) at the base of the main floater consists of concrete, or water, or a combination of both.

6. A floating offshore wind turbine as claimed in any one of the previous claims, wherein a funicular anchor system (5) holds the wind turbine in place.

7. A floating offshore wind turbine as claimed in any one of the previous claims, wherein the axis of the blades is horizontal.

8. A floating offshore wind turbine as claimed in any one of claims 1 to 6, wherein the axis of the blades is vertical.

Figure 1

Figure 2

Figure 3

Figure 4

Figure 5a　　　　　Figure 5b　　　　　Figure 5c

Figures 6a

Figure 6b

Figure 7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2012169914 A
- WO 03004869 A